# EUROPÄISCHE PATENTSCHRIFT

(11) **EP 1 419 927 B1**
(45) Veröffentlichungstag und Bekanntmachung des Hinweises auf die Patenterteilung: **12.12.2007**
(21) Anmeldenummer: 03090286.0
(22) Anmeldetag: 04.09.2003
(51) Int. Cl.: B60N 2/30, B60N 2/36

(54) **Zusammenlegbarer Rücksitz zur Erzeugung eines Stauraumes**
Rear seat, foldable to create a storage volume
Siège arrière pliable pour la réalisation d'un volume de rangement

(30) Priorität: 08.10.2002 DE 10247398
(43) Veröffentlichungstag der Anmeldung: 19.05.2004
(73) Patentinhaber: Volkswagen Aktiengesellschaft, 38436 Wolfsburg (DE)
(72) Erfinder: Heiringhoff, Heinz, 31691 Helpsen (DE); Sulowski, Robert, 67-200 Jaczow (PL); Rynkiewicz, Krzysztof, 59-300 Lubin (PL); Luzny, Artur, 59-300 Lubin (PL)
(74) Vertreter: Schneider, Henry

(56) Entgegenhaltungen:
- EP-A- 1 077 153
- DE-A- 2 849 985
- DE-A- 4 422 920
- DE-U- 29 512 327
- FR-A- 2 814 992
- FR-A- 2 817 209
- US-A- 5 839 773
- US-A- 6 106 046
- PATENT ABSTRACTS OF JAPAN Bd. 2000, Nr. 10, 17. November 2000 (2000-11-17) -& JP 2000 185581 A (KANTO AUTO WORKS LTD), 4. Juli 2000 (2000-07-04)

## Beschreibung

Die Erfindung betrifft einen Fahrzeugsitz, insbesondere einen klappbaren Fahrzeugrücksitz für ein Kraftfahrzeug, und ein Verfahren zum Zusammenklappen und Umlegen, mit den in den Oberbegriffen der Ansprüche 1 und 17 genannten Merkmalen.

Es ist bekannt, Fahrzeugsitze zur Gewinnung eines zusätzlichen Nutzraumes für den Gütertransport klappbar zu gestalten. Insbesondere kommen hierfür die hinteren Sitzreihen eines Kraftfahrzeuges in Betracht. Hierzu gibt es verschiedene Anordnungen, die ein Umlegen, Zurückklappen oder Hochklappen der Teile eines Fahrzeugsitzes ermöglichen, um innerhalb des Fahrzeuges das Volumen für den Transport von Gütern zu vergrößern. Die Fahrzeugsitze können dabei, in Abhängigkeit von der Ausführung der Klappvorrichtung, in eine vordere Position verschoben und zusammengeklappt werden oder sie können mit dem Sitzteil zum Fahrzeugboden hin verschwenkt und flach aufgeklappt werden, so dass die Rückseite des Fahrzeugsitzes einen Teil der Ladefläche bildet.

Eine Sitzanordnung mit einem derart verschwenkbaren und flach am Fahrzeugboden aufklappbaren Fahrzeugsitz ist aus der DE 44 22 920 A1 bekannt. Der Fahrzeugsitz ist um eine Schwenkachse, die unterhalb des vorderen Bereiches des Sitzes angeordnet ist, verschwenkbar. Die Enden der Schwenkachse sind in seitlich unterhalb des Sitzes verlaufenden Führungsschienen längsverschiebbar gelagert. Eine derartige Ausbildung beansprucht jedoch viel Raum im Bereich des Fahrzeugbodens und erfordert einen größeren Aufwand bei der Überführung des Fahrzeugsitzes von seiner Gebrauchslage in eine Nichtgebrauchslage.

Die DE 28 49 985 A1 beschreibt eine weitere Sitzanordnung mit einem zu einem Teil der Ladefläche umklappbaren Rücksitz. Der umklappbare Fahrzeugsitz ist bei dieser Lösung nicht längsverschiebbar gelagert. Damit der Fahrzeugsitz in eine langgestreckte Position auf dem Fahrzeugboden ausgeklappt werden kann, muss der vor dem umklappbaren Sitz angeordnete Sitz durch Hochklappen aus seiner Gebrauchslage entfernt werden. Das Hochklappen des Fahrzeugsitzes erfolgt derart, dass zunächst nach Lösung einer entsprechenden Arretierung die Rückenlehne des Fahrzeugsitzes auf das Sitzteil umgeklappt wird. Danach werden die Rückenlehne und das Sitzteil zusammen um den am Vorderteil des Fahrzeugsitzes angeordneten Schwenkpunkt hochgeklappt beziehungsweise umgeschwenkt.

Eine weitere Lösung ist in dem Gebrauchsmuster DE 295 123 27 offenbart. Das Gebrauchsmuster beschreibt einen Rücksitz für Kraftfahrzeuge, bestehend aus einem Sitzteil und aus einem Lehnenteil, wobei der Sitzteil mittels beidseitig angeordneter Gestelle vorwärts schwenkbar mit dem Fahrzeugkörper verbunden ist und der Lehnenteil bezüglich des Sitzteiles ebenfalls vorwärts schwenkbar ist. Jedes Gestell bildet dabei mit dem Sitzteil ein Gelenkviereck, wobei der Fahrzeugkörper die Basis und der Sitzteil die Koppel ist und Schwingen die Beine des Sitzteiles ausbilden. Das Sitzteil ist mit einem Lehnentragarm fest verbunden, in dem der Lehnenteil schwenkbar gelagert ist und die hintere Schwinge über ein Getriebe mit dem Lehnenteil so verbunden ist, dass beim Vorwärtsschwenken der hinteren Schwinge auch der Lehnenteil vorwärts geschwenkt wird.

Aus der Druckschrift US 5,839,773 ist ein weiterer Fahrzeugsitz bekannt, der faltbar in einem Stauraum einer Vertiefung einer Karosserie unterbringbar ist. Am rückseitigen Teil des Fahrzeugsitzes, insbesondere des Sitzteiles, sind Elemente angeordnet, die so ausgeführt sind, dass in ihnen Rollen führbar sind. Diese Rollen befinden sich an einer Sitzteilkonstruktion und ermöglichen die Verschiebung des Fahrzeugsitzes in Richtung eines Fahrzeugfonds. Auf der Vorderseite des Fahrzeugsitzes, insbesondere des Sitzteiles, sind Führungselemente angeordnet, die über einen Schwenkpunkt die Verbringung des Fahrzeugsitzes in die Vertiefung ermöglichen. Nachteilig bei dieser bekannten Lösung ist, dass zur Realisierung der horizontalen Bewegung des Fahrzeugsitzes in Richtung des Kraftfahrzeugfonds ein relativ großer Platzbedarf nötig ist.

Die Druckschrift US 6,106,046 beschreibt ferner ein Kraftfahrzeug, insbesondere einen Minivan, welcher mindestens einen Rücksitz in Fahrtrichtung des Kraftfahrzeuges - gesehen hinter einem Frontsitz - aufweist. Der Rücksitz besitzt eine Rückenlehne, die auf das Sitzteil geschwenkt werden kann. Die Karosserie des Kraftfahrzeuges besitzt ebenfalls in Front des Rücksitzes eine Vertiefung, in der der Rücksitz untergebracht werden kann. Ein Klappmechanismus schwenkt den Rücksitz nach vorherigem Klappen der Rückenlehne auf das Sitzteil in die Vertiefung der Karosserie. Der Klappmechanismus weist zwei in Front und zwei auf der Rückseite des Sitzteiles des Kraftfahrzeugsitzes angeordnete Stützen auf, die jeweils eine Schwenkachse ausbilden, durch deren Anordnung der Kraftfahrzeugsitz um eine weitere, am Karosserieboden angeordnete Schwenkachse in die im Karosserieboden befindliche Vertiefung schwenkbar ist. Mittels dieser Vorrichtung ist ebenfalls ein relativ großer Platzbedarf zur Durchführung der Schwenkbewegung notwendig.

Schließlich geht insbesondere aus der EP 1 077 153 A1 ein Fahrzeugsitz hervor, der ein Rückenlehnenteil und mindestens ein Sitzteil umfasst, der mit einer Karosserie verbindbar ist, wobei das mindestens eine Rückenlehnenteil um eine erste Schwenkachse schwenkbar und in Richtung des einen Sitzteiles klappbar ist und das eine Sitzteil gemeinsam mit dem einen Rückenlehnenteil um eine zweite Schwenkachse drehbeweglich gelagert ist und das Sitzteil und das mindestens eine Rückenlehnenteil über mindestens ein Führungselement um mindestens eine weitere Schwenkachse drehbeweglich an der Karosserie angeordnet sind.

Bei den Lösungen des Standes der Technik wird zur Unterbringung der Sitzteile im Bereich des Kraftfahrzeugbodens ein bestimmtes Raumangebot benötigt, welches vor allem bei kleineren Kraftfahrzeugen schwer realisierbar ist. Zumeist ist es nach dem Stand der Technik nicht möglich, den Fahrzeugsitz sowohl in den Bereich des Fahrzeugbodens und gleichzeitig unter den davor liegenden Fahrzeugsitz zu klappen beziehungsweise umzulegen, ohne den davor liegenden Fahrzeugsitz zu verändern.

Der Erfindung liegt daher die Aufgabe zugrunde, einen Fahrzeugsitz, insbesondere klappbaren Fahrzeugrücksitz für Kraftfahrzeuge, für den hinteren Bereich des Innenraumes des Kraftfahrzeuges der eingangs genannten Art zu schaffen, mittels dem einfachst ein Fahrzeugsitz unter geringem Platzbedarf zusammenklappbar und umlegbar ist.

Diese Aufgabe wird durch einen Fahrzeugsitz, insbesondere klappbaren Fahrzeugsitz für Kraftfahrzeuge, mit den im Anspruch 1 genannten Merkmalen gelöst.

Der Fahrzeugsitz ist also unter den davor liegenden Fahrzeugsitz verschwenkbar, und zwar ohne dass in einem vor dem Fahrzeugsitz liegenden Bereich des Fahrzeuges ein erhöhtes Raumangebot zum Klappen beziehungsweise zum Umlegen des Fahrzeugsitzes benötigt wird und ohne die Funktionalität in der Gebrauchsstellung des Fahrzeugsitzes zu verringern. Dadurch, dass das mindestens eine Rückenlehnenteil auf das mindestens eine Sitzteil um die erste Schwenkachse unter Ausbildung eines gestuften Ladebodens klappbar ist, wobei das Sitzteil und das Rückenlehnenteil durch ein an der mindestens einen zweiten Schwenkachse angreifendes erstes Führungselement und ein auf einer dritten Schwenkachse mit dem ersten Führungselement verbundenem zweiten Führungselement, über mindestens eine vierte Schwenkachse drehbeweglich an der Karosserie angeordnet und die an eine Form der Karosserie angepasst sind, wobei die dritte Schwenkachse in eine Klapp- beziehungsweise Umlegerichtung des Fahrzeugsitzes entgegengesetzten Richtung angeordneten Ausnehmung in der Karosserie angeordnet ist und das mindestens eine Rückenlehnenteil und das mindestens eine Sitzteil gemeinsam um die zweite, dritte und vierte Schwenkachse unter einen vorgelagerten Sitz in eine Vertiefung unter Ausbildung eines im Wesentlichen ebenen Ladebodens schwenkbar sind, ist in vorteilhafter Weise nur ein geringer Platzbedarf notwendig.

Durch diese bevorzugte Ausführung ist der Fahrzeugsitz durch seine karosserienahe Führung über die erste und/oder zweite und/oder dritte und/oder vierte Schwenkachse variabel und platzsparend zunächst in den gestuften Ladeboden und abschließend unter einen Vordersitz verlagerbar.

Die Aufgabe wird ebenfalls durch ein Verfahren mit den im Anspruch 17 genannten Merkmalen gelöst. Es ist vorgesehen, dass unter Ausbildung einer ersten Schwenkkurve für das mindestens eine Rückenlehnenteil und einer Schwenkkurve für das mindestens eine Sitzteil das mindestens eine Rückenlehnenteil auf das mindestens eine Sitzteil um die erste Schwenkachse unter Bildung eines gestuften Ladebodens geklappt wird und anschließend das mindestens eine Rückenlehnenteil und das mindestens eine Sitzteil gemeinsam unter einen vorgelagerten Sitz in eine Vertiefung über die zweite Schwenkachse und eine dritte Schwenkachse und eine vierte Schwenkachse unter Bildung eines im Wesentlichen ebenen Ladebodens weiter verschwenkt werden, wobei durch die an eine Form der Karosserie angepasste, die zweite, dritte und vierte Schwenkachse verbindenden ersten und zweiten Führungselemente und eine in der Karosserie angeordnete Ausnehmung für die dritte Schwenkachse das Rückenlehnenteil und das Sitzteil besonders karosserienah verschwenkt wird.

In bevorzugter Ausgestaltung der Erfindung weist das erste und zweite Führungselement jeweils einen geringen Abstand zwischen der zweiten Schwenkachse und der dritten Schwenkachse beziehungsweise zwischen der dritten und vierten Schwenkachse auf. Der Abstand der Schwenkachsen voneinander bildet einen ersten und zweiten Schwenkradius aus. Je geringer dieser Schwenkradius ausgebildet ist, desto geringer ist der Platzbedarf, der zum Schwenken des Sitzteiles und Rückenlehnenteiles benötigt wird. Die Ausbildung geringer Abstände zwischen der dritten und vierten Schwenkachse und deren daraus resultierenden geringen ersten und zweiten Radien bewirken zwischen der zweiten und vierten Schwenkachse ebenfalls einen geringen dritten Schwenkradius. Durch Überlagerung der Schwenkbewegungen um die Schwenkachsen sind Schwenkkurven für das Rückenlehnenteil und das Sitzteil ausbildbar, die besonders platzsparend sind.

Der Fahrzeugsitz weist dazu in bevorzugter Ausgestaltung der Erfindung eine Ausnehmung in der Karosserie auf. Diese Ausnehmung ist entgegen einer Klapprichtung in der Karosserie angeordnet. Die in der Karosserie angeordnete Ausnehmung erzeugt einen größeren Abstand des ersten Führungselementes von einem davor angeordneten Sitz und einen geringeren Abstand von der Karosserie.

Neben der angeordneten Ausnehmung sind ferner das erste und zweite Führungselement an die Form der Karosserie angepasst. Das erste und zweite Führungselement sind zur Anpassung an die Karosserie sichelförmig und/oder s-förmig ausgeführt. Ein geringer Abstand zwischen der zweiten, dritten und vierten Schwenkachse bildet damit einen ersten, zweiten und dritten Radius aus, die somit geringe Maße aufweisen. Dadurch ist der Fahrzeugsitz, insbesondere das Sitzteil beziehungsweise das Rückenlehnenteil, besonders nah an der Karosserie entlangführbar.

Bevorzugt ist weiterhin, dass der Fahrzeugsitz von der Karosserie durch eine erste Ausrückbewegung in eine Ausrückrichtung gelöst und das mindestens eine Sitzteil um die erste Schwenkachse in eine erste im Wesentlichen horizontale Position rotiert (gestufter Ladeboden) und in eine parallele Lage zum mindestens einen Rückenlehnenteil zusammengeklappt wird und das mindestens eine Rückenlehnenteil und das mindestens eine Sitzteil um die zweite Schwenkachse, die dritte Schwenkachse und die vierte Schwenkachse in eine im Wesentlichen vertikale Position rotiert und nach vorne bewegt wird und das mindestens eine Rückenlehnenteil und das mindestens eine Sitzteil um die zweite Schwenkachse, die dritte Schwenkachse und die vierte Schwenkachse rotiert und nach unten auf die Karosserie umgelegt wird, so dass eine Rückseite des mindestens einen Rückenlehnenteiles eine zweite im Wesentlichen horizontale Position (ebener Ladeboden) einnimmt, wodurch insbesondere der Stauraum eines Kraftfahrzeuges vergrößert wird. Hierdurch wird - ohne dass ein erhöhtes Raumangebot zur Verfügung steht - ein Zusammenklappen beziehungsweise Umlegen des Fahrzeugsitzes in vorteilhafter Weise ermöglicht.

In bevorzugter Ausgestaltung der Erfindung werden die erste horizontale Position, die vertikale Position und die zweite horizontale Position des Rückenlehnenteiles und des Sitzteiles auf einer Schwenkkurve für das Sitzteil und auf einer Schwenkkurve für das Rückenlehnenteil durch Ausführung geringer Schwenkradien zwischen den jeweiligen Schwenkachsen eines ersten und zweiten Führungselementes, an dem das Rückenlehnenteil und das Sitzteil schwenkbar angeordnet werden, in einem geringen Abstand zur Karosserie geführt. Insbesondere wird eine Vorderkante-Sitzteil und eine Oberkante-Rückenlehnenteil auf einer Schwenkkurve-Rückenlehnenteil und einer Schwenkkurve-Sitzteil geführt. Die Vorderkante-Sitzteil und die Oberkante-Rückenlehnenteil sind die Positionen, die bei einem Klappen des Fahrzeugsitzes als erstes mit einem vorgelagerten Sitz in Berührung kommen. Die erzeugten Schwenkkurven Sitzteil und Rückenlehnenteil stellen erfindungsgemäß sicher, dass die Vorderkante-Sitzteil und die Oberkante-Rückenlehnenteil den vorgelagerten Sitz nicht berühren, wobei ein sehr geringer Platzbedarf notwendig ist.

Ferner ist das mindestens eine Sitzteil und/oder das mindestens eine Rückenlehnenteil über ein erstes und/oder ein zweites Verriegelungselement und ein zugehöriges erstes und/oder zweites Halteelement mit der Karosserie verbindbar. Dabei ist das erste Verriegelungselement vorzugsweise ein Haken, der am Rückenlehnenteil befestigt ist und ein erstes Halteelement, welches an der Karosserie befestigt ist, insbesondere ein Rohr, umgreift. Das zweite Verriegelungselement ist vorzugsweise ein Schloss, welches an dem mindestens einen Rückenlehnenteil und/oder an dem mindestens einen Sitzteil befestigt ist und in ein zweites Halteelement, insbesondere eine Stiftplatte, eingreift. Zudem ist das mindestens eine Rückenlehnenteil über ein erstes bewegliches Verbindungselement mit dem mindestens einen Sitzteil an der ersten Schwenkachse verbunden. Das mindestens eine Sitzteil ist über ein zweites bewegliches Verbindungselement mit dem ersten Führungselement an der zweiten Schwenkachse verbunden.

In bevorzugter Ausgestaltung der Erfindung ist ferner das erste Führungselement über ein drittes bewegliches Verbindungselement mit dem zweiten Führungselement an der dritten Schwenkachse verbunden. Das zweite Führungselement ist über ein viertes bewegliches Verbindungselement mit der Karosserie unter Bildung der vierten Schwenkachse verbunden.

Bevorzugt ist weiter, dass die Verbindungselemente Scharniere oder dergleichen sind und dass das mindestens eine Sitzteil gemeinsam mit dem mindestens einen Rückenlehnenteil in einer Vertiefung der Karosserie klappbar beziehungsweise umlegbar ist.

Dadurch ergeben sich insgesamt folgende Vorteile. Einzelne Fahrzeugsitze oder Rücksitzbänke müssen zur Erzeugung eines großen gestuften oder im Wesentlichen ebenen Laderaumes nicht ausgebaut werden, sondern können problemlos in dem Fußraum versenkt werden. Vorgelagerte Sitzreihen brauchen nicht verändert zu werden, sogar dann nicht, wenn sich die vorgelagerten Sitzreihen in ihrer hintersten Position befinden.

Das Schwenken des Sitzteiles beziehungsweise des Rückenlehnenteiles ist nach Entriegelung besonders einfach möglich. Dabei ist es vorteilhaft auch möglich, Zwischenstellungen einzustellen, wie beispielsweise die erste vertikale Position oder die erste horizontale Position.

An dem ersten Halteelement, dem Rohr, welches am Rückenlehnenteil befestigt ist, können vorteilhaft Gurtkräfte eingeleitet werden.

An dem Rohr können ferner Laderaumnetze und Rollos integriert werden.

Die Lösung führt ferner insgesamt zu einer Gewichtsreduzierung der Sitzstruktur und erlaubt leichte Entnehmbarkeit und Versenkbarkeit.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: einen Kraftfahrzeugsitz, insbesondere einen Kraftfahrzeugrücksitz, in einer Schnittdarstellung in seiner Gebrauchsstellung;
- Figur 2A: den Kraftfahrzeugrücksitz in einer Schnittdarstellung in einer ersten Entriegelungsstellung;
- Figur 2B: den Kraftfahrzeugrücksitz in einer Schnittdarstellung in einer in eine erste horizontale Position um eine erste Schwenkachse A geklappten Stellung;
- Figur 2C: den Kraftfahrzeugrücksitz in einer Schnittdarstellung in einer um eine zweite Schwenkachse und eine dritte Schwenkachse teilweise vertikalen geklappten Position;
- Figur 2D: den Kraftfahrzeugrücksitz in einer Schnittdarstellung in einer weiteren um die erste Schwenkachse B und die zweite Schwenkachse C teilweise vertikalen geschwenkten Position;
- Figur 2E: den Kraftfahrzeugrücksitz in einer Schnittdarstellung in einer um die zweite Schwenkachse B und die dritte Schwenkachse C und eine vierte Schwenkachse D im Wesentlichen vertikal geklappten Position;
- Figur 2F: den Kraftfahrzeugrücksitz in einer Schnittdarstellung in einer um die zweite Schwenkachse B, die dritte Schwenkachse C und die vierte Schwenkachse D unter einen vor dem Kraftfahrzeugrücksitz liegenden Fahrzeugsitz geklappten Position und
- Figur 2G: den Kraftfahrzeugrücksitz in einer Schnittdarstellung in einer um die erste, zweite, dritte und vierte Schwenkachse A, B, C, D zusammengeklappten beziehungsweise umgelegten Position unter einem vor dem Fahrzeugrücksitz angeordneten Fahrzeugsitz.

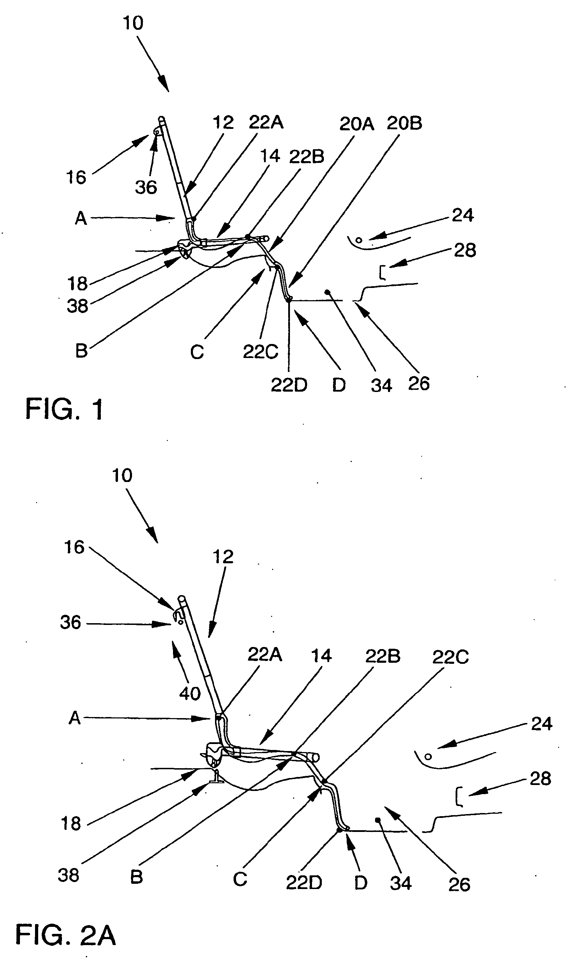

Ein erfindungsgemäßer Fahrzeugsitz 10, insbesondere ein Kraftfahrzeugrücksitz für ein Kraftfahrzeug, umfasst - wie Figur 1 zeigt - ein Sitzteil 14 und ein Rückenlehnenteil 12. Das Rückenlehnenteil 12 weist eine erste Schwenkachse A auf. Das Rückenlehnenteil 12 ist über ein erstes Verbindungselement 22A an der ersten Schwenkachse A mit dem Sitzteil 14 verbunden. Das Sitzteil 14 weist eine zweite Schwenkachse B auf, an der ein erstes Führungselement 20A über ein zweites Verbindungselement 22B mit dem Sitzteil 14 verbunden ist. Das erste Führungselement 20A ist mit einem zweiten Führungselement 20B an einer dritten Schwenkachse C über ein drittes Verbindungselement 22C verbunden. An einer Karosserie 26 ist das zweite Führungselement 20B über ein viertes Verbindungselement 22D verbunden und bildet eine vierte Schwenkachse D aus. Eine weitere Verbindung des Fahrzeugsitzes 10 zur Karosserie 26 ist im hinteren Bereich des Sitzteiles 14 ausgeführt. Die Karosserie 26 weist hier ein zweites Halteelement 38 auf, in welches ein zweites Verriegelungselement 18, zum Beispiel ein Schloss, eingreift, das fest mit dem Sitzteil 14 verbunden ist. Ferner weist das Rückenlehnenteil 12 ein erstes Halteelement 36 auf, welches insbesondere als ein Rohr oder dergleichen ausgeführt ist. Ein erstes Verriegelungselement 16 greift in einer möglichen Ausführungsvariante als ein Haken oder dergleichen in das erste Halteelement 36 ein.

Figur 1 zeigt ferner einen vorgelagerten Fahrzeugsitz 24 und einen Rahmen 28 des vorgelagerten Fahrzeugsitzes 24. In der Karosserie 26 ist vorzugsweise eine Vertiefung 34 angeordnet. Eine Ausnehmung in der Karosserie 26 ist ferner im Bereich der dritten Schwenkachse C dargestellt.

Die beschriebenen Elemente, das erste Verriegelungselement 16, das erste Halteelement 36, das zweite Verriegelungselement 18, das zweite Halteelement 38, das erste Führungselement 20A und das zweite Führungselement 20B und die Verbindungselemente 22A, 22B, 22C und 22D, sind vorzugsweise beidseitig des Kraftfahrzeugrücksitzes 10 angeordnet. Aufgrund der Schnittebene ist jedoch in den Zeichnungen jeweils nur ein Element 16, 36, 18, 38, 20A, 20B und 22A, 22B, 22C sowie 22D sichtbar. Eine Ausführung mit nicht beidseitigen angeordneten Elementen, beispielsweise in zentraler Anordnung des Sitzteiles 14, ist jedoch ebenfalls denkbar.

In den folgenden Figuren 2A bis 2G bezeichnen gleiche Bezugszeichen gleiche Elemente. Der Übersichtlichkeit halber wurden die Verbindungselemente 22A, 22B, 22C sowie 22D und das erste und zweite Führungselement 20A und 20B nur in Figur 1 bezeichnet.

Figur 2A zeigt wiederum den Kraftfahrzeugrücksitz 10. Der wesentliche Unterschied der Figur 2A zu der Figur 1 besteht darin, dass der Kraftfahrzeugrücksitz 10 in eine Ausrückrichtung durch eine erste Ausrückbewegung entriegelt ist. Das erste Verriegelungselement 16, beispielsweise der Haken, wird aus dem ersten Halteelement 36, beispielsweise das Rohrelement, ausgeklinkt. Das zweite Verriegelungselement 18, beispielsweise das Schloss, wird aus dem zweiten Halteelement 38, beispielsweise die Stiftplatte, gelöst. Ein weiterer Unterschied zu Figur 1 besteht in der Hervorhebung einer Oberkante des Rückenlehnenteiles 12 und einer Vorderkante des Sitzteiles 14 durch eine kreisförmig vergrößerte Darstellung.

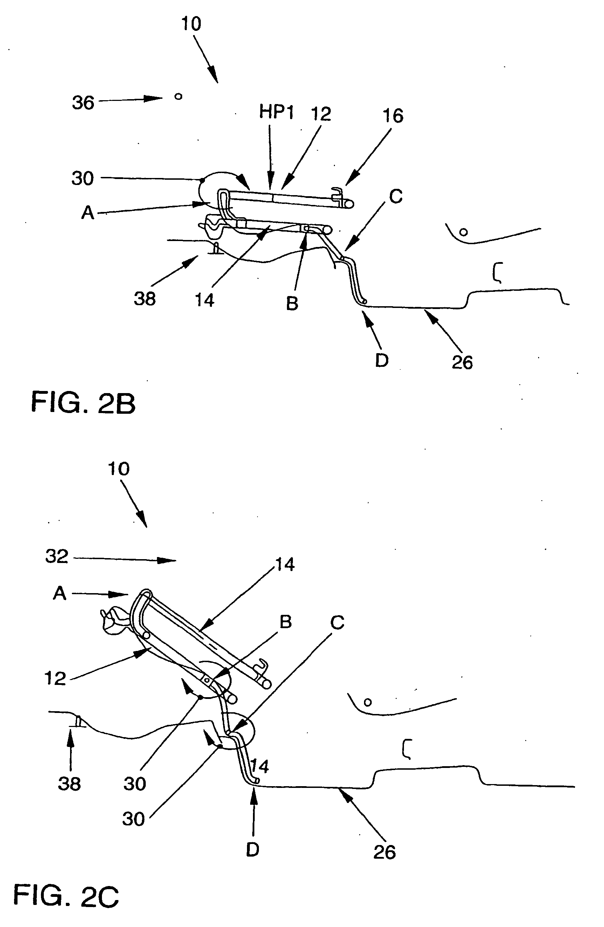

Figur 2B zeigt den Kraftfahrzeugrücksitz 10 in einer ersten horizontalen Position . Durch Lösen des ersten Verriegelungselementes 16 aus dem ersten Halteelement 36 ist das Rückenlehnenteil 12 zunächst um die Schwenkachse A in einer Rotationsrichtung 30 - im Uhrzeigersinn - klappbar. Das Rückenlehnenteil 12 wird nach dem erfindungsgemäßen Verfahren aus der vertikalen Position um die Schwenkachse A in die im Wesentlichen erste horizontale Position geklappt. Damit erreicht das Rückenlehnenteil 12 zum Sitzteil 14 eine im Wesentlichen parallele Lage. Das Rückenlehnenteil 12 wird auf einer Schwenkkurve-Rückenlehnenteil verlagert. Das in die erste horizontale Position geklappte Rückenlehnenteil 12 bildet mit dem Kofferraum einen gestuften Ladeboden aus. Beim Schwenken des Rückenlehnenteiles 12 um die erste Schwenkachse erreicht die Oberkante des Rückenlehnenteiles 12 nicht den vorgelagerten Sitz 24. Erst bei einem weiteren Klappen beziehungsweise Schwenken des Fahrzeugsitzes 10 um die Schwenkachsen B, C, D ist eine karosserienahe Schwenkung notwendig, um den vorgelagerten Sitz 24 nicht verändern zu müssen. Diesen Vorgang zeigt Figur 2C bis 2G.Die Vorderkante des Sitzteiles 14 und die Oberkante des Rückenlehnenteiles 12 sind jedoch besonders entscheidend, da sie die ersten Berührungspunkte zu dem vorlagerten Sitz 24 und dem Rahmen 28 des vorgelagerten Sitzes 24 sind.

Figur 2C zeigt den weiteren Klappmechanismus beziehungsweise den weiteren Schwenkvorgang des Kraftfahrzeugrücksitzes 10. Es erfolgt eine erste teilweise Rotation in eine Klapp- beziehungsweise Umlegerichtung 32 um die zweite Schwenkachse B und um die dritte Schwenkachse C in Rotationsrichtung 30 in Uhrzeigerrichtung. Durch diese Rotation wird das Rückenlehnenteil 12 gemeinsam mit dem Sitzteil 14 aus der im Wesentlichen horizontalen Position in eine erste teilweise vertikale Position VP1 geschwenkt. Erfindungsgemäß wird das Sitzteil 14 möglichst weit hinten entgegen der Klapp- beziehungsweise Umlegerichtung 32 angeordnet sein. Dabei wird ein möglichst geringer Schwenkradius erreicht. Durch die sichelförmige Ausbildung des ersten Führungselementes 20A weist der Fahrzeugsitz 10 zum Schwenken um die Schwenkachse C gemäß Figur 2C eine Ausführung des Führungselementes 20A mit einem ersten optimalen Schwenkradius r1 (in Figur 2C nicht dargestellt) auf, der möglichst klein ist und durch den Abstand zwischen der zweiten Schwenkachse B und der dritten Schwenkachse C bestimmt wird. Der vorhandene erste Schwenkradius r1 (in Figur 2C nicht dargestellt) und die nah an der Karosserie 26 liegende zweite Schwenkachse B ermöglicht eine besonders tiefe Anordnung des Fahrzeugsitzes 10 auf dem Führungselement 20A. Ein Schwenkradius r2 (in Figur 2C nicht dargestellt) zwischen der dritten Schwenkachse C und der vierten Schwenkachse D ergibt sich aus der Anordnung und Form des zweiten Führungselementes 20B. Die Schwenkachse D des Führungselementes 20B ist unter Ausbildung eines dritten Schwenkradius r3 (in Figur 2C nicht dargestellt) zwischen der vierten Schwenkachse D und zweiten Schwenkachse B besonders weit hinten im Kraftfahrzeug entgegen der Klappbeziehungsweise Umlegerichtung 32 angeordnet und der dritte Schwenkradius r3 (in Figur 2C nicht dargestellt) weist ein geringes Maß auf, da der Fahrzeugsitz 10, insbesondere das Sitzteil 14, zudem karosserienah angeordnet ist.

Die Position der vierten Schwenkachse D bestimmt den Beginn der Vertiefung 34 in der Karosserie 26. Das zweite Führungselement 20B weist eine sichelförmige Ausführung auf. Die sichelförmige Ausführung ermöglicht ferner eine optimale Verbindung der Führungselemente 20A und 20B über das dritte Verbindungselement 22C und eine Auslegung der ersten und zweiten Schwenkradien r1 und r2 bei einem Schwenkvorgang um die Schwenkachsen B, C und D. Ein geringer erster und zweiter Schwenkradius r1 und r2 (in Figur 2C nicht dargestellt) ermöglicht Schwenkbewegungen der Führungselemente 20A und 20B um die dritte und/oder vierte Schwenkachse C, D und auf dem sich ergebenden Schwenkradius r3 (in Figur 2C nicht dargestellt) eine gemeinsame Schwenkbewegung der Führungselemente 20A, 20B um die vierte Schwenkachse D.

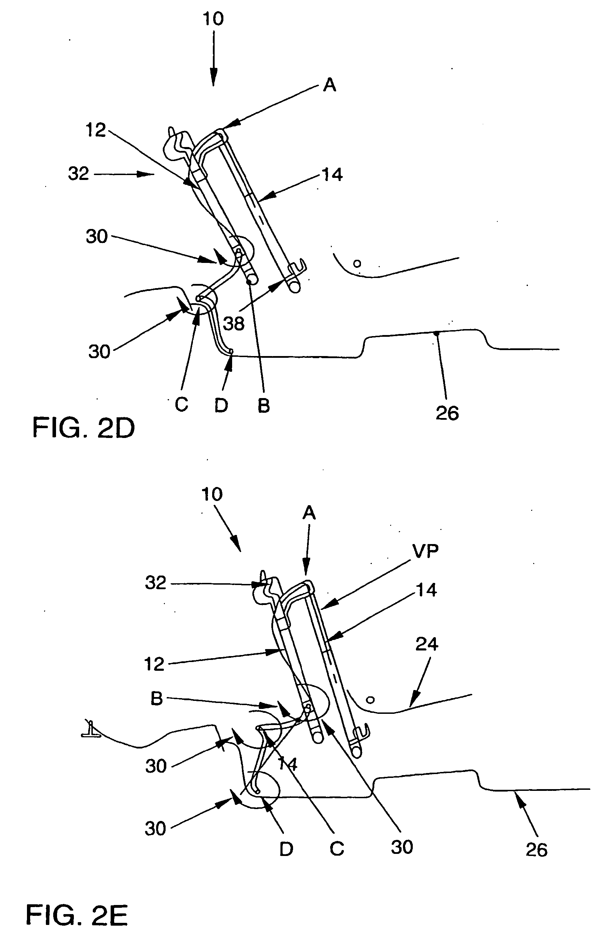

Figur 2D zeigt das Weiterschwenken des Rückenlehnenteiles 12 gemeinsam mit dem Sitzteil 14 um die zweite Schwenkachse B und um die dritte Schwenkachse C in Rotationsrichtung 30. Der Kraftfahrzeugrücksitz 10 wird dabei weiter in Klappbeziehungsweise Umlegerichtung 32 bewegt. Die geringen Abstände der drei Schwenkachsen B, C, D zueinander und die sich daraus ergebenden Schwenkradien r1, r2 und r3 (in Figur 2C nicht dargestellt) ergeben eine Schwenk-Klappbewegung auf engstem Raum.

In Figur 2E erreicht der Kraftfahrzeugrücksitz 10 eine im Wesentlichen vertikale Position VP. Dazu wurde das Rückenlehnenteil 12 und das Sitzteil 14 weiter in Klappbeziehungsweise Umlegerichtung 32 in Uhrzeigersinn um die zweite Schwenkachse B, die dritte Schwenkachse C und die vierte Schwenkachse D in Rotationsrichtung 30 bewegt. Ein weiteres Klappen beziehungsweise Umlegen in Klapp- beziehungsweise Umlegerichtung 32 ist durch das Vorhandensein des vorgelagerten Fahrzeugsitzes 24 nach Erreichen der vertikalen Position VP durch weitere Rotation um eine der Schwenkachsen B, C, D nicht mehr möglich. Dadurch wird das Sitzteil 14 gemeinsam mit dem Rückenlehnenteil 12 um die zweite Schwenkachse B und die dritte Schwenkachse C zum Teil auch entgegen der Rotationsrichtung 30 bewegt und um die vierte Schwenkachse D weiter in Rotationsrichtung 30 geschwenkt. Bei sehr geringem Platzbedarf werden das Sitzteil 14 und das Rückenlehnenteil 12 weiter um die dritte Schwenkachse C geschwenkt und um die zweite Schwenkachse B entgegen der Klapp- beziehungsweise Umlegerichtung 32 geschwenkt, wodurch der Schwenkradius r3 variiert wird. Durch diese Möglichkeiten ist es möglich, den Fahrzeugsitz 10 leicht bei geringem Platzbedarf unter den vorgelagerten Sitz 24 zu schwenken.

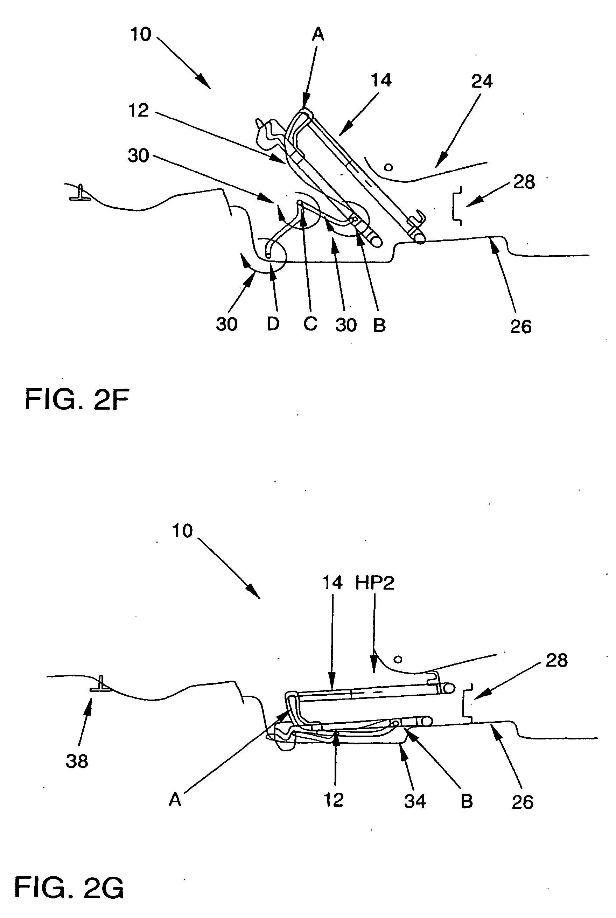

Einen entsprechenden Schwenkvorgang zeigt Figur 2F. Das Sitzteil 14 wird gemeinsam mit dem Rückenlehnenteil 12 entgegen der Rotationsrichtung 30 um die zweite Schwenkachse B und die dritte Schwenkachse C und in Rotationsrichtung 30 um die vierte Schwenkachse D geschwenkt. Der Kraftfahrzeugsitz 10 wird somit aus der vertikalen Position VP wieder in eine teilweise vertikale Zwischenposition vor Erreichen einer zweiten horizontalen Position geschwenkt.

Figur 2G zeigt abschließend die zweite horizontale Position des Kraftfahrzeugrücksitzes 10, bei der ein im Wesentlichen ebener Ladeboden ausgebildet ist. Durch die abschließende Rotation in Rotationsrichtung 30 der vierten Schwenkachse D und den Abschluss der Rotation entgegen der Rotationsrichtung der dritten Schwenkachse C und der zweiten Schwenkachse B, D werden das Rückenlehnenteil 12 und das parallel angeordnete Sitzteil 14 unter den vorgelagerten Fahrzeugsitz 24 und/oder in die Vertiefung 34 geklappt beziehungsweise umgelegt. Die Vertiefung 34 stellt eine weitere Ausbildung der Erfindung dar, jedoch ist das erfindungsgemäße Verfahren auch ausführbar, wenn die Vertiefung 34 nicht angeordnet ist. Durch Ausbildung der Vertiefung 34 in der Karosserie 26 ist eine besonders vorteilhafte, Platz sparende Anordnung des Fahrzeugsitzes 10, insbesondere des Kraftfahrzeugrücksitzes, in seiner Nichtgebrauchsstellung möglich.

Der beschriebene Vorgang ist selbstverständlich auch in umgekehrter Weise ausführbar, wodurch der Fahrzeugsitz 10 von der zweiten horizontalen Position über die erste vertikale Position VP1 und von der ersten horizontalen Position in seine Ausgangslage - die Gebrauchsstellung - zusammengeklappt beziehungsweise zurückverlegt wird. Es sind also sowohl Schwenkbewegungen in Rotationsrichtung 30 oder entgegen der dargestellten Rotationsrichtung 30 ausführbar.

### BEZUGSZEICHENLISTE

- 10: Fahrzeugsitz/Fahrzeugrücksitz
- 12: Rückenlehnenteil
- 14: Sitzteil
- 16: erstes Verriegelungselement
- 18: zweites Verriegelungselement
- 20: Führungselemente
- 20A: erstes Führungselement
- 20B: zweites Führungselement
- 22: Verbindungselemente
- 22A: erstes Verbindungselement
- 22B: zweites Verbindungselement
- 22C: drittes Verbindungselement
- 22D: viertes Verbindungselement
- 24: vorgelagerter Fahrzeugsitz
- 26: Karosserie
- 28: Rahmen des vorgelagerten Fahrzeugsitzes
- 30: Rotationsrichtung
- 32: Klapp- beziehungsweise Umlegerichtung
- 34: Vertiefung
- 36: erstes Halteelement
- 38: zweites Halteelement
- A: erste Schwenkachse
- B: zweite Schwenkachse
- C: dritte Schwenkachse
- D: vierte Schwenkachse
- r1: erster Schwenkradius (B → C)
- r2: zweiter Schwenkradius (C → D)
- r3: dritter Schwenkradius (B → D)

## Patentansprüche

1. Fahrzeugsitz (10), insbesondere klappbarer Fahrzeugrücksitz für ein Kraftfahrzeug, der mindestens ein Rückenlehnenteil (12) und mindestens ein Sitzteil (14) umfasst und mit einer Karosserie (26) verbindbar ist, wobei das mindestens eine Rückenlehnenteil (12) um eine erste Schwenkachse (A) schwenkbar und in Richtung des mindestens einen Sitzteiles (14) klappbar ist und das mindestens eine Sitzteil (14) gemeinsam mit dem mindestens einen Rückenlehnenteil (12) um mindestens eine zweite Schwenkachse (B) drehbeweglich angeordnet sind, **dadurch gekennzeichnet, dass**
• das mindestens eine Rückenlehnenteil (12) auf das mindestens eine Sitzteil (14) um die erste Schwenkachse (A) unter Ausbildung eines gestuften Ladebodens klappbar ist.
• wobei das Sitzteil (14) und das Rückenlehnenteil (12) durch ein an der mindestens einen zweiten Schwenkachse (B) angreifendes erstes Führungselement (20A) und ein auf einer dritten Schwenkachse (C) mit dem ersten Führungselement (20A) verbundenem zweiten Führungselement (20B), über mindestens eine vierte Schwenkachse (D) drehbeweglich an der Karosserie (26) angeordnet und die an eine Form der Karosserie (26) angepasst sind,
• wobei die dritte Schwenkachse (C) in eine Klapp- beziehungsweise Umlegerichtung (32) des Fahrzeugsitzes (10) entgegengesetzten Richtung angeordneten Ausnehmung in der Karosserie (26) angeordnet ist,
• und das mindestens eine Rückenlehnenteil (12) und das mindestens eine Sitzteil (14) gemeinsam um die zweite, dritte und vierte Schwenkachse (B, C, D) unter einen vorgelagerten Sitz (24) in eine Vertiefung (34) unter Ausbildung eines im Wesentlichen ebenen Ladebodens schwenkbar sind.

2. Fahrzeugsitz nach Anspruch 1, **dadurch gekennzeichnet, dass** das erste und zweite Führungselement (20A, 20B) jeweils einen geringen Abstand zwischen der zweiten Schwenkachse (B) und der dritten Schwenkachse (C) beziehungsweise zwischen der dritten Schwenkachse (C) und der vierten Schwenkachse (D) ausbilden, so dass ein möglichst geringer erster und zweiter Schwenkradius (r1, r2) zwischen der zweiten Schwenkachse (B) und der dritten Schwenkachse (C) und der vierten Schwenkachse (D) unter Ausbildung eines möglichst geringen dritten Schwenkradius (r3) zwischen der zweiten Schwenkachse (B) und der vierten Schwenkachse (D) beim Schwenken von Sitzteil (14) und Rückenlehnenteil (12) ausbildbar ist.

3. Fahrzeugsitz nach Anspruch 1 bis 2, **dadurch gekennzeichnet, dass** das Rückenlehnenteil (12) und das Sitzteil (14) über eine der Schwenkachsen (A, B, C, D) gleichzeitig oder nacheinander schwenkbar angeordnet sind und durch Überlagerung der Schwenkbewegungen eine Schwenkkurve-Rückenlehnenteil und eine Schwenkkurve-Sitzteil ausbildbar sind.

4. Fahrzeugsitz nach Anspruch 3, **dadurch gekennzeichnet, dass** eine Oberkante-Rückenlehnenteil und eine Vorderkante-Sitzteil der Schwenkkurve-Rückenlehnenteil und der Schwenkkurve-Sitzteil zuordbar sind.

5. Fahrzeugsitz (10) nach Anspruch 1 , **dadurch gekennzeichnet, dass** die dritte Schwenkachse (C) unterhalb des mindestens einen Sitzteiles (14) karosserienah anordbar ist.

6. Fahrzeugsitz nach Anspruch 1, **dadurch gekennzeichnet, dass** das erste und/oder zweite Führungselement (20A, 20B) sichelförmig oder s-förmig ausbildbar sind.

7. Fahrzeugsitz nach Anspruch 1, **dadurch gekennzeichnet, dass** das mindestens eine Rückenlehnenteil (12) und das mindestens eine Sitzteil (14) über die zweite und dritte und vierte Schwenkachse (B, C, D) karosserienah zwischen der Karosserie (26) und einem vorgelagerten Sitz (24) entlangführbar angeordnet sind.

8. Fahrzeugsitz nach Anspruch 1, **dadurch gekennzeichnet, dass** das mindestens eine Sitzteil (14) und/oder das mindestens eine Rückenlehnenteil (12) über ein erstes und/oder ein zweites Verriegelungselement (16, 18) und ein zugehöriges erstes und/oder zweites Halteelement (36, 38) mit der Karosserie (26) verbindbar sind.

9. Fahrzeugsitz nach einem der vorhergehenden Ansprüche, **dadurch gekennzeichnet, dass** das erste Verriegelungselement (16) ein Haken ist, der an dem mindestens einen Rückenlehnenteil (12) befestigt ist und das an der Karosserie befestigte erste Halteelement (36), insbesondere ein Rohr, umgreift.

10. Fahrzeugsitz nach einem der vorhergehenden Ansprüche, **dadurch gekennzeichnet, dass** das zweite Verriegelungselement (18) ein Schloss ist, welches an dem mindestens einen Rückenlehnteil (12) und/oder an dem mindestens einen Sitzteil (14) befestigt ist und in ein zweites Halteelement (38), insbesondere in eine Stiftplatte, eingreift.

11. Fahrzeugsitz nach einem der vorhergehenden Ansprüche, **dadurch gekennzeichnet, dass** das mindestens eine Rückenlehnenteil (12) über ein erstes bewegliches Verbindungselement (22A) mit dem mindestens einen Sitzteil (14) an der ersten Schwenkachse (A) verbunden ist.

12. Fahrzeugsitz nach einem der vorhergehenden Ansprüche, **dadurch gekennzeichnet, dass** das mindestens eine Sitzteil (14) über ein zweites bewegliches Verbindungselement (22B) mit dem ersten Führungselement (20A) an der zweiten Schwenkachse (B) verbunden ist.

13. Fahrzeugsitz nach einem der vorhergehenden Ansprüche, **dadurch gekennzeichnet, dass** das erste Führungselement (20A) über ein drittes bewegliches Verbindungselement (22C) mit dem zweiten Führungselement (20B) an der dritten Schwenkachse (C) verbunden ist.

14. Fahrzeugsitz nach einem der vorhergehenden Ansprüche, **dadurch gekennzeichnet, dass** das zweite Führungselement (20B) über ein viertes bewegliches Verbindungselement (22D) mit der Karosserie (26) an der vierten Schwenkachse (D) verbunden ist.

15. Fahrzeugsitz nach einem der vorhergehenden Ansprüche, **dadurch gekennzeichnet, dass** die Verbindungselemente (22A, 22B, 22C und 22D) Scharniere oder dergleichen sind.

16. Fahrzeugsitz nach einem der vorhergehenden Ansprüche, **dadurch gekennzeichnet, dass** das mindestens eine Sitzteil (14) gemeinsam mit dem mindestens einen Rückenlehnenteil (12) in eine Vertiefung (34) in der Karosserie (26) klappbar beziehungsweise umlegbar ist.

17. Verfahren zum Zusammenklappen und Umlegen eines Fahrzeugsitzes, insbesondere eines klappbaren Fahrzeugrücksitzes für ein Kraftfahrzeug, zur Erzeugung eines Stauraumes, der mindestens ein Rückenlehnenteil (12) und mindestens ein Sitzteil (14) aufweist und mit einer Karosserie (26) verbunden ist, wobei das mindestens eine Rückenlehnenteil (12) um eine erste Schwenkachse (A) geschwenkt wird und in Richtung des mindestens einen Sitzteiles (14) geklappt wird und das mindestens eine Sitzteil (14) gemeinsam mit dem mindestens einen Rückenlehnenteil (12) mindestens um eine zweite Schwenkachse (B) bewegt wird, **dadurch gekennzeichnet, dass** unter Ausbildung einer ersten Schwenkkurve für das mindestens eine Rückenlehnenteil (12) und einer Schwenkkurve für das mindestens eine Sitzteil (14) das mindestens eine Rückenlehnenteil (12) auf das mindestens eine Sitzteil (14) um die erste Schwenkachse (A) unter Bildung eines gestuften Ladebodens geklappt wird und anschließend das mindestens eine Rückenlehnenteil (12) und das mindestens eine Sitzteil (14) gemeinsam unter einen vorgelagerten Sitz (24) in eine Vertiefung (34) über die zweite Schwenkachse (B) und eine dritte Schwenkachse (C) und eine vierte Schwenkachse (D) unter Bildung eines im Wesentlichen ebenen Ladebodens weiter verschwenkt werden, wobei durch die an eine Form der Karosserie (26) angepassten, die zweite, dritte und vierte Schwenkachse verbindenden ersten und zweiten Führungselemente (20A, 20B) und eine in der Karosserie (26) angeordnete Ausnehmung für die dritte Schwenkachse (C) das Rückenlehnenteil (12) und das Sitzteil (14) besonders karosserienah verschwenkt wird.

18. Verfahren nach Anspruch 17, **dadurch gekennzeichnet, dass** das Rückenlehnenteil (12) und das Sitzteil (14) auf einer Schwenkkurve für das Sitzteil (14) und auf einer Schwenkkurve für das Rückenlehnenteil (12) durch Ausführung geringer Schwenkradien (r1, r2, r3) zwischen den jeweiligen Schwenkachsen (B, C, D) eines ersten und zweiten Führungselementes (20A, 20B), an dem das Rückenlehnenteil (12) und das Sitzteil (14) schwenkbar angeordnet werden, in einem geringen Abstand zur Karosserie (26) geführt werden.

19. Verfahren nach Anspruch 18, **dadurch gekennzeichnet, dass** eine Oberkante-Rückenlehnenteil und eine Vorderkante-Sitzteil der Schwenkkurve-Rückenlehnenteil und der Schwenkkurve-Sitzteil zugeordnet werden.

20. Verfahren nach einem der vorhergehenden Ansprüche, **dadurch gekennzeichnet, dass** der Fahrzeugsitz (10) von der Karosserie (26) durch eine erste Ausrückbewegung in eine Ausrückrichtung gelöst und das mindestens eine Sitzteil (14) um die erste Schwenkachse (A) in eine erste im Wesentlichen horizontale Position rotiert und in eine parallele Lage zum mindestens einen Rückenlehnenteil (12) zusammengeklappt wird und einen gestuften Ladeboden ausbildet.

21. Verfahren nach einem der vorhergehenden Ansprüche, **dadurch gekennzeichnet, dass** das mindestens eine Rückenlehnenteil (12) und das mindestens eine Sitzteil (14) um die zweite Schwenkachse (B) und die dritte Schwenkachse (C) und die vierte Schwenkachse (D) in eine im Wesentlichen vertikale Position (VP) rotieren.

22. Verfahren nach einem der vorhergehenden Ansprüche, **dadurch gekennzeichnet, dass** das mindestens eine Rückenlehnenteil (12) und das mindestens eine Sitzteil (14) um die zweite Schwenkachse (B) und/oder die dritte Schwenkachse (C) und/oder die vierte Schwenkachse (D) rotieren und auf die Karosserie (26) umgelegt werden, so dass eine Rückseite des mindestens einen Rückenlehnenteiles (12) eine zweite im Wesentlichen horizontale Position einnimmt, wodurch insbesondere der Stauraum eines Kraftfahrzeuges vergrößert wird und einen im Wesentlichen ebenen Ladeboden ausbildet.

23. Verfahren nach einem der vorhergehenden Ansprüche, **dadurch gekennzeichnet, dass** der Fahrzeugsitz (10) durch Entriegelung eines ersten Verriegelungselementes (16) und/oder durch Entriegelung eines zweiten Verriegelungselementes (18) von der Karosserie (26) gelöst und nach erfolgter Rückverlagerung wieder verriegelt wird.

## Claims

1. Vehicle seat (10), in particular foldable vehicle rear seat for a motor vehicle, which comprises at least one backrest part (12) and at least one seat part (14) and can be connected to a vehicle body (26), the at least one backrest part (12) being pivotable about a first pivot axis (A) and being foldable in the direction of the at least one seat part (14), and the at least one seat part (14) being arranged together with the at least one backrest part (12) in a manner such that it can rotate about at least one second pivot axis (B),
**characterized in that**
• the at least one backrest part (12) can be folded about the first pivot axis (A) onto the at least one seat part (14) with a stepped loading floor being formed,
• the seat part (14) and the backrest part (12) being arranged rotatably on the vehicle body (26) via at least one fourth pivot axis (D) by means of a first guide element (20A) acting on the at least one second pivot axis (B) and a second guide element (20B) connected to the first guide element (20A) on a third pivot axis (C), and said parts being matched to a shape of the vehicle body (26),
• the third pivot axis (C) being arranged in the vehicle body (26) in a recess arranged in a direction opposed to the folding or folding-over direction (32) of the vehicle seat (10),
• and the at least one backrest part (12) and the at least one seat part (14) can be pivoted together about the second, third and fourth pivot axis (B, C, D) under a seat (24) mounted in front into a depression (34) with an essentially planar loading floor being formed.

2. Vehicle seat according to Claim 1, **characterized in that** the first and second guide elements (20A, 20B) respectively form a small distance between the second pivot axis (B) and the third pivot axis (C) and between the third pivot axis (C) and the fourth pivot axis (D), and therefore an as small as possible first and second pivoting radius (r1, r2) can be formed between the second pivot axis (B) and the third pivot axis (C) and the fourth pivot axis (D), with an as small as possible third pivoting radius (r3) being formed between the second pivot axis (B) and the fourth pivot axis (D) during pivoting of seat part (14) and backrest part (12).

3. Vehicle seat according to Claims 1 and 2, **characterized in that** the backrest part (12) and the seat part (14) are arranged such that they can be pivoted simultaneously or successively via one of the pivot axes (A, B, C, D), and, by combining the pivoting movements, a backrest part pivoting curve and a seat part pivoting curve can be formed.

4. Vehicle seat according to Claim 3, **characterized in that** a backrest part upper edge can be assigned to the backrest part pivoting curve and a seat part front edge can be assigned to the seat part pivoting curve.

5. Vehicle seat (10) according to Claim 1, **characterized in that** the third pivot axis (C) can be arranged below the at least one seat part (14) in the vicinity of the vehicle body.

6. Vehicle seat according to Claim 1, **characterized in that** the first and/or second guide element(s) (20A, 20B) can be of sickle-shaped or S-shaped design.

7. Vehicle seat according to Claim 1, **characterized in that** the at least one backrest part (12) and the at least one seat part (14) are arranged such that they can be guided along in the vicinity of the vehicle body between the vehicle body (26) and a seat (24) mounted in front via the second and third and fourth pivot axes (B, C, D).

8. Vehicle seat according to Claim 1, **characterized in that** the at least one seat part (14) and/or the at least one backrest part (12) can be connected to the vehicle body (26) via a first and/or a second locking element (16, 18) and an associated first and/or second retaining element (36, 38).

9. Vehicle seat according to one of the preceding claims, **characterized in that** the first locking element (16) is a hook which is fastened to the at least one backrest part (12) and engages around the first retaining element (36), in particular a tube, which is fastened to the vehicle body.

10. Vehicle seat according to one of the preceding claims, **characterized in that** the second locking element (18) is a lock which is fastened to the at least one backrest part (12) and/or to the at least one seat part (14) and engages in a second retaining element (38), in particular in a pin plate.

11. Vehicle seat according to one of the preceding claims, **characterized in that** the at least one backrest part (12) is connected at the first pivot axis (A) to the at least one seat part (14) via a first movable connecting element (22A).

12. Vehicle seat according to one of the preceding claims, **characterized in that** the at least one seat part (14) is connected at the second pivot axis (B) to the first guide element (20A) via a second movable connecting element (22B).

13. Vehicle seat according to one of the preceding claims, **characterized in that** the first guide element (20A) is connected at the third pivot axis (C) to the second guide element (20B) via a third movable connecting element (22C).

14. Vehicle seat according to one of the preceding claims, **characterized in that** the second guide element (20B) is connected at the fourth pivot axis (D) to the vehicle body (26) via a fourth movable connecting element (22D).

15. Vehicle seat according to one of the preceding claims, **characterized in that** the connecting elements (22A, 22B, 22C and 22D) are hinges or the like.

16. Vehicle seat according to one of the preceding claims, **characterized in that** the at least one seat part (14) can be folded or can be folded over together with the at least one backrest part (12) into a depression (34) in the vehicle body (26).

17. Method for folding up and folding over a vehicle seat, in particular a foldable vehicle rear seat for a motor vehicle, to create a storage volume, the vehicle seat having at least one backrest part (12) and at least one seat part (14) and being connected to a vehicle body (26), wherein the at least one backrest part (12) is pivoted about a first pivot axis (A) and is folded in the direction of the at least one seat part (14), and the at least one seat part (14) is moved together with the at least one backrest part (12) at least about a second pivot axis (B), **characterized in that**, with a first pivoting curve for the at least one backrest part (12) and a pivoting curve for the at least one seat part (14) being formed, the at least one backrest part (12) is folded about the first pivot axis (A) onto the at least one seat part (14), with a stepped loading floor being formed, and subsequently the at least one backrest part (12) and the at least one seat part (14) are together pivoted further via the second pivot axis (B) and a third pivot axis (C) and a fourth pivot axis (D) under a seat (24) mounted in front into a depression (34), with an essentially planar loading floor being formed, the backrest part (12) and the seat part (14) being pivoted particularly close to the vehicle body by means of the first and second guide elements (20A, 20B), which are matched to a shape of the vehicle body (26) and connect the second, third and fourth pivot axes, and a recess, which is arranged in the vehicle body (26), for the third pivot axis (C).

18. Method according to Claim 17, **characterized in that** the backrest part (12) and the seat part (14) are guided at a small distance from the vehicle body (26) on a pivoting curve for the seat part (14) and on a pivoting curve for the backrest part (12) by small pivoting radii (r1, r2, r3) being realized between the respective pivot axes (B, C, D) of a first and second guide element (20A, 20B) on which the backrest part (12) and the seat part (14) are pivotably arranged.

19. Method according to Claim 18, **characterized in that** a backrest part upper edge is assigned to the backrest part pivoting curve and a seat part front edge is assigned to the seat part pivoting curve.

20. Method according to one of the preceding claims, **characterized in that** the vehicle seat (10) is released from the vehicle body (26) by a first disengaging movement in a disengaging direction, and the at least one seat part (14) rotates about the first pivot axis (A) into a first essentially horizontal position and is folded up into a parallel position to the at least one backrest part (12) and forms a stepped loading floor.

21. Method according to one of the preceding claims, **characterized in that** the at least one backrest part (12) and the at least one seat part (14) rotate about the second pivot axis (B) and the third pivot axis (C) and the fourth pivot axis (D) into an essentially vertical position (VP).

22. Method according to one of the preceding claims, **characterized in that** the at least one backrest part (12) and the at least one seat part (14) rotate about the second pivot axis (B) and/or the third pivot axis (C) and/or the fourth pivot axis (D) and are folded over onto the vehicle body (26) such that a rear side of the at least one backrest part (12) takes up a second essentially horizontal position, as a result of which, in particular, the storage volume of a motor vehicle is increased and an essentially planar loading floor is formed.

23. Method according to one of the preceding claims, **characterized in that** the vehicle seat (10) is released from the vehicle body (26) by unlocking of a first locking element (16) and/or by unlocking of a second locking element (18) and is locked again after it has been shifted back.

## Revendications

1. Siège de véhicule (10), en particulier siège arrière pliable de véhicule pour un véhicule automobile, qui comprend au moins une partie de dossier (12) et au moins une partie de siège (14) et qui peut être assemblé à une carrosserie (26), dans lequel ladite au moins une partie de dossier (12) peut pivoter autour d'un premier axe de pivotement (A) et est pliable en direction de ladite au moins une partie de siège (14) et ladite au moins une partie de siège (14) est mobile en rotation avec ladite au moins une partie de dossier (12) autour d'au moins un deuxième axe de pivotement (B), **caractérisé en ce que**
• ladite au moins une partie de dossier (12) est pliable sur ladite au moins une partie de siège (14) autour du premier axe de pivotement (A) en formant un plateau de chargement étagé;
• dans lequel la partie de siège (14) et la partie de dossier (12) sont mobiles en rotation sur la carrosserie (26) par un premier élément de guidage (20A) engagé sur ledit au moins un deuxième axe de pivotement (B) et un deuxième élément de guidage (20B) assemblé au premier élément de guidage (20A) sur un troisième axe de pivotement (C), par au moins un quatrième axe de pivotement (D), et sont adaptés à une forme de la carrosserie (26),
• dans lequel le troisième axe de pivotement (C) est disposé dans un évidement de la carrosserie (26), disposé dans une direction opposée à la direction de pliage ou à la direction de rabattement (32) du siège de véhicule (10),
• et ladite au moins une partie de dossier (12) et ladite au moins une partie de siège (14) peuvent pivoter ensemble autour des deuxième, troisième et quatrième axes de pivotement (B, C, D) sous un siège avant (24) dans une cavité (34) en formant un plateau de chargement essentiellement plan.

2. Siège de véhicule selon la revendication 1, **caractérisé en ce que** le premier et le deuxième éléments de guidage (20A, 20B) forment chaque fois une faible distance entre le deuxième axe de pivotement (B) et le troisième axe de pivotement (C) ou entre le troisième axe de pivotement (C) et le quatrième axe de pivotement (D), de façon à pouvoir réaliser un premier et un deuxième rayons de pivotement (r1, r2) aussi petits que possible entre le deuxième axe de pivotement (B) et le troisième axe de pivotement (C) et le quatrième axe de pivotement (D) en formant un troisième rayon de pivotement (r3) aussi petit que possible entre le deuxième axe de pivotement (B) et le quatrième axe de pivotement (D) lors du pivotement de la partie de siège (14) et de la partie de dossier (12).

3. Siège de véhicule selon la revendication 1 ou 2, **caractérisé en ce que** la partie de dossier (12) et la partie de siège (14) peuvent pivoter simultanément ou l'une après l'autre par un des axes de pivotement (A, B, C, D) et la superposition des mouvements de pivotement permet de réaliser une courbe de pivotement de la partie de dossier et une courbe de pivotement de la partie de siège.

4. Siège de véhicule selon la revendication 3, **caractérisé en ce qu'**une arête supérieure de la partie de dossier et une arête avant de la partie de siège peuvent être associées à la courbe de pivotement de la partie de dossier et à la courbe de pivotement de la partie de siège.

5. Siège de véhicule (10) selon la revendication 1, **caractérisé en ce que** le troisième axe de pivotement (C) peut être disposé à proximité de la carrosserie en dessous de ladite au moins une partie de siège (14).

6. Siège de véhicule selon la revendication 1, **caractérisé en ce que** le premier et/ou le deuxième élément de guidage (20A, 20B) peuvent être réalisés en forme de croissant ou en forme de S.

7. Siège de véhicule selon la revendication 1, **caractérisé en ce que** ladite au moins une partie de dossier (12) et ladite au moins une partie de siège (14) peuvent être guidées en longueur entre la carrosserie (26) et un siège avant (24), près de la carrosserie, par les deuxième et troisième et quatrième axes de pivotement (B, C, D).

8. Siège de véhicule selon la revendication 1, **caractérisé en ce que** ladite au moins une partie de siège (14) et/ou ladite au moins une partie de dossier (12) peuvent être assemblées à la carrosserie (26) par un premier et/ou un deuxième éléments de verrouillage (16, 18) et un premier et/ou un deuxième éléments de maintien correspondants (36, 38).

9. Siège de véhicule selon l'une quelconque des revendications précédentes, **caractérisé en ce que** le premier élément de verrouillage (16) est un crochet, qui est fixé à ladite au moins une partie de dossier (12) et qui accroche un premier élément de maintien (36), en particulier un tube, fixé à la carrosserie.

10. Siège de véhicule selon l'une quelconque des revendications précédentes, **caractérisé en ce que** le deuxième élément de verrouillage (18) est une serrure, qui est fixée à ladite au moins une partie de dossier (12) et/ou à ladite au moins une partie de siège (14) et qui s'engage dans un deuxième élément de maintien (38), en particulier une plaque à broches.

11. Siège de véhicule selon l'une quelconque des revendications précédentes, **caractérisé en ce que** ladite au moins une partie de dossier (12) est assemblée à ladite au moins une partie de siège (14) sur le premier axe de pivotement (A) par un premier élément d'assemblage mobile (22A).

12. Siège de véhicule selon l'une quelconque des revendications précédentes, **caractérisé en ce que** ladite au moins une partie de siège (14) est assemblée au premier élément de guidage (20A) sur le deuxième axe de pivotement (B) par un deuxième élément d'assemblage mobile (22B).

13. Siège de véhicule selon l'une quelconque des revendications précédentes, **caractérisé en ce que** le premier élément de guidage (20A) est assemblé au deuxième élément de guidage (20B) sur le troisième axe de pivotement (C) par un troisième élément d'assemblage mobile (22C).

14. Siège de véhicule selon l'une quelconque des revendications précédentes, **caractérisé en ce que** le deuxième élément de guidage (20B) est assemblé à la carrosserie (26) sur le quatrième axe de pivotement (D) par un quatrième élément d'assemblage mobile (22D).

15. Siège de véhicule selon l'une quelconque des revendications précédentes, **caractérisé en ce que** les éléments d'assemblage (22A, 22B, 22C et 22D) sont des charnières ou analogues.

16. Siège de véhicule selon l'une quelconque des revendications précédentes, **caractérisé en ce que** ladite au moins une partie de siège (14) peut être pliée ou rabattue avec ladite au moins une partie de dossier (12) dans une cavité (34) de la carrosserie (26).

17. Procédé pour plier et rabattre un siège de véhicule, en particulier un siège arrière pliable de véhicule pour un véhicule automobile, pour la réalisation d'un volume de rangement, qui comprend au moins une partie de dossier (12) et au moins une partie de siège (14) et qui est assemblé à une carrosserie (26), dans lequel on fait pivoter ladite au moins une partie de dossier (12) autour d'un premier axe de pivotement (A) et on la plie en direction de ladite au moins une partie de siège (14) et on déplace ladite au moins une partie de siège (14) en même temps que ladite au moins une partie de dossier (12) au moins autour d'un deuxième axe de pivotement (B), **caractérisé en ce que** l'on replie ladite au moins une partie de dossier (12) sur ladite au moins une partie de siège (14) pour former un plateau de chargement étagé en décrivant une première courbe de pivotement pour ladite au moins une partie de dossier (12) et une deuxième courbe de pivotement pour ladite au moins une partie de siège (14), et on fait ensuite encore pivoter ladite au moins une partie de dossier (12) et ladite au moins une partie de siège (14) ensemble en dessous d'un siège avant (24) dans une cavité (34), au moyen du deuxième axe de pivotement (B) et d'un troisième axe de pivotement (C) et d'un quatrième axe de pivotement (D), en formant un plateau de chargement essentiellement plan, dans lequel on fait pivoter la partie de dossier (12) et la partie de siège (14) particulièrement près de la carrosserie par des premiers et deuxièmes éléments de guidage (20A, 20B) adaptés à la forme de la carrosserie (26) et reliant le deuxième, le troisième et le quatrième axes de pivotement, et un évidement disposé dans la carrosserie (26) pour le troisième axe de pivotement (C).

18. Procédé selon la revendication 17, **caractérisé en ce que** la partie de dossier (12) et la partie de siège (14) sont guidées à faible distance de la carrosserie (26) sur une courbe de pivotement pour la partie de siège (14) et sur une courbe de pivotement pour la partie de dossier (12) en décrivant de faibles rayons de pivotement (r1, r2, r3) entre les axes de pivotement respectifs (B, C, D) d'un premier et d'un deuxième éléments de guidage (20A, 20B), sur lesquels la partie de dossier (12) et la partie de siège (14) sont disposées de manière pivotante.

19. Procédé selon la revendication 18, **caractérisé en ce qu'**une arête supérieure de la partie de dossier et une arête avant de la partie de siège sont associées à la courbe de pivotement de la partie de dossier et à la courbe de pivotement de la partie de siège.

20. Procédé selon l'une quelconque des revendications précédentes, **caractérisé en ce que** l'on sépare le siège de véhicule (10) de la carrosserie (26) par un premier mouvement de décrochage dans une direction de décrochage et on fait pivoter ladite au moins une partie de siège (14) autour du premier axe de pivotement (A) dans une première position essentiellement horizontale et on la replie dans une position parallèle à ladite au moins une partie de dossier (12) pour former un plateau de chargement étagé.

21. Procédé selon l'une quelconque des revendications précédentes, **caractérisé en ce que** ladite au moins une partie de dossier (12) et ladite au moins une partie de siège (14) pivotent autour du deuxième axe de pivotement (B) et du troisième axe de pivotement (C) et du quatrième axe de pivotement (D) dans une position essentiellement verticale (VP).

22. Procédé selon l'une quelconque des revendications précédentes, **caractérisé en ce que** ladite au moins une partie de dossier (12) et ladite au moins une partie de siège (14) pivotent autour du deuxième axe de pivotement (B) et/ou du troisième axe de pivotement (C) et/ou du quatrième axe de pivotement (D) et sont rabattues sur la carrosserie (26), de telle manière que le dos de ladite au moins une partie de dossier (12) occupe une deuxième position essentiellement horizontale, ce qui permet d'agrandir le volume de rangement d'un véhicule automobile et de former un plateau de chargement essentiellement plan.

23. Procédé selon l'une quelconque des revendications précédentes, **caractérisé en ce que** l'on détache le siège de véhicule (10) de la carrosserie (26) par déverrouillage d'un premier élément de verrouillage (16) et/ou par déverrouillage d'un deuxième élément de verrouillage (18) et on le verrouille de nouveau après un nouveau déplacement vers l'arrière.
